# EUROPEAN PATENT APPLICATION

(11) **EP 4 068 766 A1**
(43) Date of publication of application: **05.10.2022**
(21) Application number: 20897541.7
(22) Date of filing: 02.12.2020
(51) Int. Cl.: H04N 13/00

(54) **MULTI-VIEWPOINT 3D DISPLAY APPARATUS, DISPLAY METHOD AND DISPLAY SCREEN CORRECTION METHOD**

(30) Priority: 05.12.2019 CN 201911231174
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/133324
(87) International publication number: WO 2021/110031

(57) **Abstract**

The present application relates to the technical field of 3D display, and discloses a method for realizing multi-viewpoint 3D display screen correction, comprising: determining a correction area in a multi-viewpoint 3D display screen, and detecting a reference correlation between subpixels in composite subpixels in composite pixels in the multi-viewpoint 3D display screen and viewpoints of the multi-viewpoint 3D display screen; and determining a correction correlation between the subpixels in the correction area and the viewpoints based on the reference correlation. The method can reduce the difficulty in correcting an actual correlation between the pixels and the viewpoints. The present application further discloses a multi-viewpoint 3D display method, a multi-viewpoint 3D display apparatus, a computer-readable storage medium, and a computer program product.

## Description

The present application claims priority to the Chinese Patent Application with an application number of 2019112311748 and a title of "Multi-viewpoint Naked-eye 3D Display Apparatus, Display Method and Display Screen Correction Method", filed to China National Intellectual Property Administration on December 5th, 2019, the disclosures of which are hereby incorporated by reference.

### Technical Field

The present application relates to the technical field of 3D display, and for example, relates to a multi-viewpoint 3D display apparatus, a display method and a display screen correction method.

### Background

At present, multi-viewpoint 3D display apparatuses refracts light emitted by pixels to corresponding viewpoints by utilizing gratings to realize a 3D effect.

In a process of implementing embodiments of the present disclosure, it is discovered that because of installation, materials or alignment of the gratings, there may be problems that an actually-viewed pixel at a viewpoint in a space does not correspond to a theoretical pixel. Since the multi-viewpoint 3D display apparatus has a large number of pixels, it is very difficult to determine a correlation between pixels and viewpoints one by one.

### Summary

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a method for realizing multi-viewpoint 3D display screen correction, a multi-viewpoint 3D display method, a multi-viewpoint 3D display apparatus, a computer-readable storage medium and a computer program product, to solve a technical problem of great difficulty in determining the correction correlation between each subpixel and viewpoint.

According to the embodiments of the present disclosure, a method for realizing multi-viewpoint 3D display screen correction is provided, comprising: determining a correction area in a multi-viewpoint 3D display screen, and detecting a reference correlation between subpixels in composite subpixels in the multi-viewpoint 3D display screen and viewpoints of the multi-viewpoint 3D display screen; and determining, on the basis of the reference correlation, a correction correlation between the subpixels and the viewpoints in the correction area.

In some embodiments, the method for realizing multi-viewpoint 3D display screen correction further comprises: storing the correction correlation.

In some embodiments, determining the correction areas in the multi-viewpoint 3D display screen comprises: determining a plurality of correction areas in the multi-viewpoint 3D display screen in a form of array; or determining a length or a width of the correction area by a percentage of the length or width of the multi-viewpoint 3D display screen; or determining the correction area by a plurality of composite pixels or a plurality of composite subpixels in the multi-viewpoint 3D display screen; or determining the correction area by a viewpoint correlation or an optical correlation of the multi-viewpoint 3D display screen.

In some embodiments, determining the plurality of correction areas in a form of array in the multi-viewpoint 3D display screen comprises: determining the length of each correction area of the plurality of correction areas by 2 cm to 20 cm; or determining the width of each correction area of a plurality of correction areas by 2 cm to 20 cm.

In some embodiments, determining the length or width of the correction areas by the percentage of the length or width of the multi-viewpoint 3D display screen comprises: determining the length of the correction area by 1% to 30% of the length of the multi-viewpoint 3D display screen; or determining the width of the correction area by 1% to 30% of the width of the multi-viewpoint 3D display screen.

In some embodiments, determining the correction areas by a plurality of composite pixels or a plurality of composite subpixels in the multi-viewpoint 3D display screen comprises: determining the correction areas by a plurality of composite pixels in a form of array in the multi-viewpoint 3D display screen; or determining the correction area by a plurality of composite subpixels in a form of array in the multi-viewpoint 3D display screen.

In some embodiments, determining the correction area by the viewpoint correlation or the optical correlation of the multi-viewpoint 3D display screen comprises: establishing the viewpoint correlation between a plurality of subpixels in the multi-viewpoint 3D display screen and at least one viewpoint, and determining the correction area based on the viewpoint correlation; or establishing the optical correlation between a plurality of subpixels in the multi-viewpoint 3D display screen and gratings of the multi-viewpoint 3D display screen, and determining the correction area based on the optical correlation.

In some embodiments, detecting the reference correlation between the subpixels in the composite subpixels in composite pixels in the multi-viewpoint 3D display screen and the viewpoints of the multi-viewpoint 3D display screen comprises: detecting the reference correlation between at least one subpixel in the correction area and at least one viewpoint based on the determined correction area.

In some embodiments, detecting the reference correlation between the subpixels in the composite subpixels in the composite pixels in the multi-viewpoint 3D display screen and the viewpoints of the multi-viewpoint 3D display screen comprises: detecting the reference correlation between a plurality of subpixels in the multi-viewpoint 3D display screen and at least one viewpoint of the multi-viewpoint 3D display screen; and determining the correction area in the multi-viewpoint 3D display screen comprises: determining, the correction area based on the detected reference correlation, wherein the correction area contains at least one subpixel of the plurality of detected subpixels.

In some embodiments, determining the correction areas based on the detected reference correlation comprises: determining a distance between two subpixels, adjacent to each other, of the plurality of detected subpixels; and taking a center line of the distance as a boundary of two correction areas adjacent to each other, wherein the two subpixels are located in the two correction areas respectively.

In some embodiments, detecting the reference correlation between the subpixels in the composite subpixels in the composite pixels in the multi-viewpoint 3D display screen and the viewpoints of the multi-viewpoint 3D display screen comprises: arranging optical detection apparatuses at a plurality of spatial positions corresponding to all viewpoints of the multi-viewpoint 3D display screen; lighting at least one subpixel in the multi-viewpoint 3D display screen; and recording a correlation between the lit subpixel and the viewpoint where the optical detection apparatus, detecting the lit subpixel, is located as the reference correlation.

In some embodiments, detecting the reference correlation between the subpixels in the composite subpixels in the composite pixels in the multi-viewpoint 3D display screen and the viewpoints of the multi-viewpoint 3D display screen comprises: arranging the optical detection apparatus on at least one spatial position corresponding to at least one viewpoint of the multi-viewpoint 3D display screen; lighting each subpixel in at least one composite subpixel in sequence; and recording the correlation between the lit subpixel and the viewpoint where the optical detection apparatus, detecting the lit subpixel, is located as the reference correlation.

In some embodiments, determining, based on the reference correlation, the correction correlation between the subpixels in the correction area and the viewpoints comprises: acquiring a theoretical correlation between the detected subpixel in the correction area and the viewpoint; determining a deviation between the theoretical correlation and the reference correlation; and determining the correction correlation between other subpixels in the correction area and the viewpoints of the multi-viewpoint 3D display screen based on the deviation.

According to the embodiments of the present disclosure, a multi-viewpoint 3D display method is provided, comprising: acquiring a correction correlation between subpixels in a correction area of a multi-viewpoint 3D display screen and viewpoints of the multi-viewpoint 3D display screen; and rendering, based on 3D signals, the subpixels in composite subpixels in composite pixels in the multi-viewpoint 3D display screen according to the correction correlation.

In some embodiments, the multi-viewpoint 3D display method further comprises: acquiring eye positioning data; and rendering the subpixels in the composite subpixels in the composite pixels in the multi-viewpoint 3D display screen comprises: rendering the subpixels, corresponding to the viewpoints corresponding to the eye positioning data, in the composite subpixels.

According to the embodiments of the present disclosure, a multi-viewpoint 3D display apparatus is provided, comprising: a multi-viewpoint 3D display screen comprising a plurality of composite pixels, each composite pixel of the plurality of composite pixels comprising a plurality of composite subpixels, each composite subpixel of the plurality of composite subpixels comprising a plurality of subpixels, wherein the multi-viewpoint 3D display screen defines a correction area; a 3D processing apparatus, configured to acquire a correction correlation between the subpixels in the correction area of the multi-viewpoint 3D display screen and the viewpoints of the multi-viewpoint 3D display screen, and trigger, based on 3D signals, the multi-viewpoint 3D display screen to render the subpixels in the plurality of composite subpixels according to the correction correlation.

In some embodiments, the multi-viewpoint 3D display apparatus further comprises: a memory, configured to store the correction correlation.

In some embodiments, the multi-viewpoint 3D display apparatus further comprises an eye positioning data acquiring apparatus, configured to acquire the eye positioning data; and the 3D processing apparatus is configured to trigger, based on the 3D signals, the multi-viewpoint 3D display screen to render the subpixels, corresponding to the viewpoints corresponding to the eye positioning data, in the composite subpixels according to the correction correlation.

In some embodiments, a plurality of correction areas are arranged in a form of array in the multi-viewpoint 3D display screen.

In some embodiments, a length of each correction area of the plurality of correction areas is 2 cm to 20 cm; or a width of each correction area of the plurality of correction areas is 2 cm to 20 cm.

A computer-readable storage medium provided by the embodiments of the present disclosure stores computer-executable instructions, and the computer-executable instructions are configured to execute the above method for realizing multi-viewpoint 3D display screen correction.

A computer program product provided by the embodiments of the present disclosure comprises computer programs stored on the computer-readable storage medium, the computer programs comprise program instructions, and make a computer execute the above method for realizing multi-viewpoint 3D display screen correction when the program instructions are executed by the computer.

The method for realizing multi-viewpoint 3D display screen correction, the multi-viewpoint 3D display method, the multi-viewpoint 3D display apparatus, the computer-readable storage medium and the computer program product, provided by the embodiments of the present disclosure, reduce the difficulty in correcting an actual correlation between the pixel and the viewpoint.

The above general description and the following description are exemplary and explanatory only, and are not intended to limit the present application.

### Description of Drawings

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Fig. 1A to Fig. 1C are schematic diagrams of multi-viewpoint 3D display apparatuses according to embodiments of the present disclosure;
Fig. 2 is a schematic diagram of a theoretical correlation between subpixels and viewpoints according to the embodiments of the present disclosure;
Fig. 3 is a schematic diagram of a correction correlation between the subpixels and the viewpoints according to the embodiments of the present disclosure;
Fig. 4 is a schematic diagram of the correction correlation between the subpixels and the viewpoints in different sub-areas according to the embodiments of the present disclosure;
Fig. 5 is a flowchart of a method for determining the correction correlation between the subpixels and the viewpoints of a multi-viewpoint 3D display apparatus according to the embodiments of the present disclosure;
Fig. 6 to Fig. 8 are schematic diagrams of reference correlations between the detection subpixels and the viewpoints according to the embodiments of the present disclosure; and
Fig. 9 is a structural schematic diagram of the multi-viewpoint 3D display apparatus according to the embodiments of the present disclosure.

### Reference numerals:

100: multi-viewpoint 3D display apparatus; 110: multi-viewpoint 3D display screen; 111: display panel; 120: processor; 121: register; 130: 3D processing apparatus; 131: cache; 140: 3D signal interface; 150: eye positioning apparatus; 160: eye positioning data interface; 300: multi-viewpoint 3D display apparatus; 310: memory; 320: processor; 330: bus; 340: communication interface; 400: composite pixel; 410: red composite subpixel; 420: green composite subpixel; 430: blue composite subpixel; 500: correction area.

### Detailed Description

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

According to embodiments of the present disclosure, a multi-viewpoint 3D display apparatus is provided, comprising a multi-viewpoint 3D display screen (such as: a multi-viewpoint naked-eye 3D display screen) and a memory. The multi-viewpoint 3D display screen may comprise a display panel and gratings. The display panel may comprise a plurality of composite pixels, each composite pixel of the plurality of composite pixels comprises a plurality of composite subpixels, and each composite subpixel of the plurality of composite subpixels comprises a plurality of subpixels corresponding to the number of viewpoints. In some embodiments, each composite subpixel is composed of a plurality of homochromatic subpixels corresponding to the number of viewpoints. The multi-viewpoint 3D display screen, or the display panel may define a plurality of correction areas, and correlation data between the subpixels in each composite subpixel and the viewpoints is correlated with each correction area. The gratings cover the display panel. The memory is configured to store the correlation data between the subpixels and the viewpoints.

In some embodiments, the multi-viewpoint 3D display apparatus further comprises a 3D signal interface configured to receive a signal of a 3D image and a 3D processing apparatus. The 3D processing apparatus is configured to be in communication connection with the memory or to be integrated with the memory.

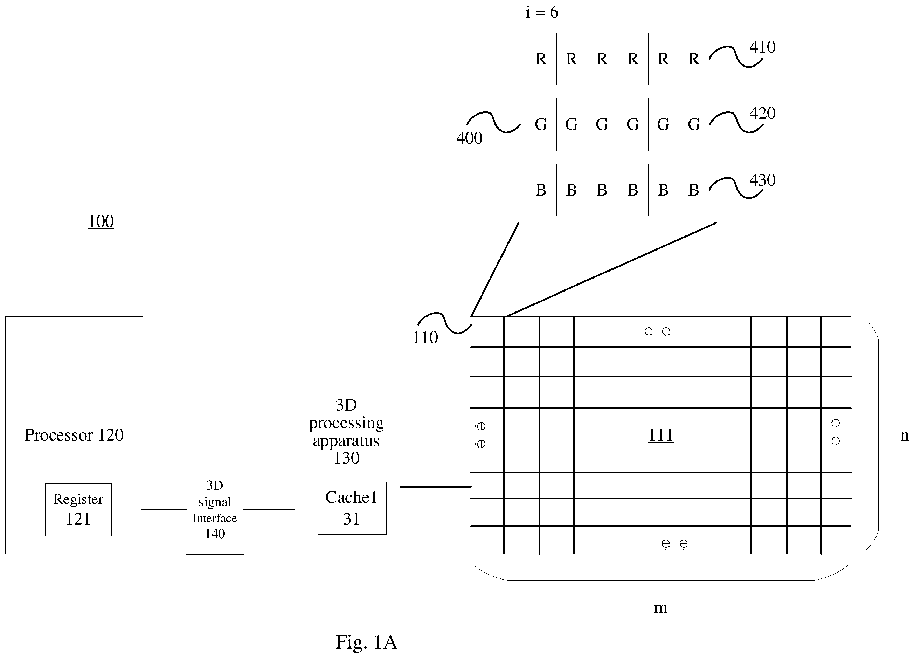

Fig. 1A shows a multi-viewpoint 3D display apparatus 100 according to the embodiments of the present disclosure. As shown in Fig. 1A, the multi-viewpoint 3D display apparatus 100 comprises a multi-viewpoint 3D display screen 110, a 3D processing apparatus 130, a 3D signal interface 140 and a processor 120.

In some embodiments, the 3D processing apparatus is in communication connection with the multi-viewpoint 3D display screen. In some embodiments, the 3D processing apparatus is in communication connection with a driving apparatus of the multi-viewpoint 3D display screen.

The multi-viewpoint 3D display screen 110 may comprise a display panel 111 and gratings (not shown) covering the display panel 111. In the embodiment shown in Fig. 1A, the display panel 111 may comprise m columns and n rows (m×n) of composite pixels 400, and thus defines a display resolution of m×n.

In some embodiments, each composite pixel comprises a plurality of composite subpixels. In the embodiment shown in Fig. 1A, each composite pixel 400 comprises three composite subpixels 410, 420, 430. The three composite subpixels correspond to three colors respectively, i.e. a red composite subpixel 410, a green composite subpixel 420 and a blue composite subpixel 430.

Each composite subpixel is composed of i homochromatic subpixels corresponding to i viewpoints. In some embodiments, i≥3.In the embodiment shown in Fig. 1A, i=6, each composite subpixel has 6 homochromatic subpixels, and the multi-viewpoint 3D display apparatus 100 may have 6 viewpoints V1-V6 correspondingly. As shown in Fig. 1A, the red composite subpixel 410 has 6 red subpixels R, the green composite subpixel 420 has 6 green subpixels G, and the blue composite subpixel 430 has 6 blue subpixels B. In other embodiments, it may be conceivable that i is other values greater than or less than 6.

In the embodiment shown in Fig. 1A, the subpixels R, G and B of each composite subpixel 410, 420, 430 in the composite pixel 400 are arranged in a single row, and the composite subpixels 410, 420, 430 are parallel to one another. However, it may be conceivable that the composite subpixels in the composite pixel have other different layout ways or the subpixels in the composite subpixel have other different layout forms. In some embodiments, the subpixels in each composite subpixel are arranged in a single column. In some embodiments, the subpixels in each composite subpixel are arranged in a form of array.

In some embodiments of the present disclosure, each composite subpixel has corresponding subpixels corresponding to the viewpoints. A plurality of subpixels of each composite subpixel are arranged in rows in a transverse direction of the multi-viewpoint 3D display screen, and the colors of the plurality of subpixels arranged in rows are the same. Because the plurality of viewpoints of the multi-viewpoint 3D display screen are distributed generally along the transverse direction of the multi-viewpoint 3D display screen, when eyes are located at different viewpoints due to the movement of a user, it is necessary to dynamically render different subpixels, corresponding to the corresponding viewpoints, in each composite subpixel. Since the homochromatic subpixels in each composite subpixel are arranged in rows, the cross color problem caused by visual persistence can be avoided. Furthermore, because of the refraction of the gratings, it is possible to see a part of the currently-displayed subpixel at an adjacent viewpoint position; however, through the arrangement of the homochromatic subpixels in the same row, even if a part of the currently-displayed subpixel is seen, the color mixture problem may not occur.

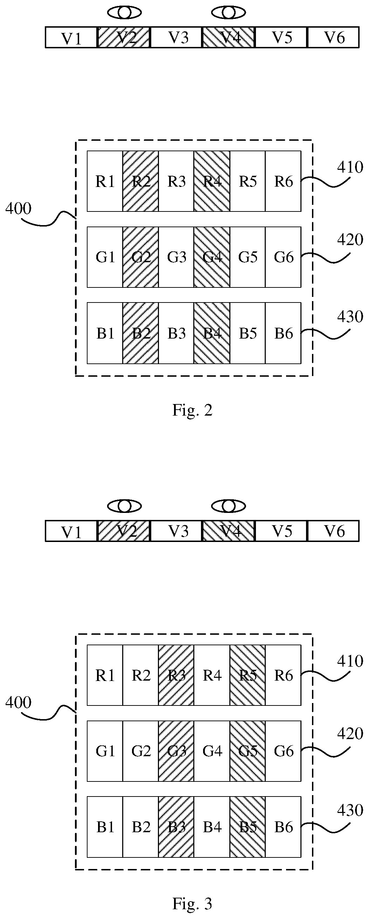

In the theoretical case, there is a theoretical correlation between the subpixels in the composite subpixel of each composite pixel and the viewpoints. Fig. 2 shows an embodiment of the theoretical correlation between the subpixels in each composite subpixel and the viewpoints. As shown in Fig. 2, in the composite pixel 400, 6 subpixels of each of the composite subpixels 410, 420, 430 correspond to 6 viewpoints V1-V6 in sequence theoretically. The users at the viewpoints V2 and V4 theoretically see second subpixels R2, G2, B2 and fourth subpixels R4, G4, B4 of each of the composite subpixels 410, 420, 430. The theoretical correlation may be set uniformly when the multi-viewpoint 3D display apparatus leaves the factory, and may also be stored in the multi-viewpoint 3D display apparatus in a form of a lookup table, for example, stored in a memory. Because of the installation, materials or alignment of gratings, when the multi-viewpoint 3D display apparatus 100 is used practically, there may be a problem that the subpixels viewed at the viewpoint in the space do not correspond to the theoretical subpixels. In the embodiments provided by the present disclosure, the correlation between the viewpoints and the subpixels in the actual use process of the multi-viewpoint 3D display apparatus is referred to as a "correction correlation". The "correction correlation" may have deviation to the "theoretical correlation", and may also be consistent with the "theoretical correlation". Fig. 3 shows an embodiment of a possible correction correlation. In the correction correlation shown by the provided embodiments, compared to the theoretical subpixels, the correction subpixels corresponding to the viewpoints V1-V6 are shifted to right by one subpixel, or compared to the theoretical viewpoints, the correction viewpoints corresponding to the subpixels of each composite subpixel are shifted to left by one viewpoint. As shown in Fig. 3, the users at the viewpoints V2 and V4 see third subpixels R3, G3, B3 and fifth subpixels R5, G5, B5 of each of the composite subpixels 410, 420, 430. After the gratings are laminated to the display panel 111, it is conducive to determining the correction correlation between each subpixel and each viewpoint of the multi-viewpoint 3D display apparatus 100.

In some embodiments, in order to determine the correction correlation between each subpixel and the viewpoint in the display panel, the display panel may be divided into a plurality of correction areas, the correction correlation between the subpixels in each correction area and the viewpoints is determined respectively, and then the correction correlation data is stored, for example, is stored in the memory of the multi-viewpoint 3D display apparatus in a form of the lookup table.

In some embodiments, the correction correlation between at least one subpixel in each correction area and at least one viewpoint is obtained by detection, and the correction correlation of other subpixels in each correction area and the viewpoints is calculated or estimated by mathematical calculation with reference to the detected correction correlation. The mathematical calculation method comprises linear difference, linear extrapolation, nonlinear difference, nonlinear extrapolation, Taylor series approximation, reference coordinate system linear change, reference coordinate system nonlinear change, exponential models and trigonometric transformation. The correction correlation as a reference basis in each correction area may be regarded as the reference correlation.

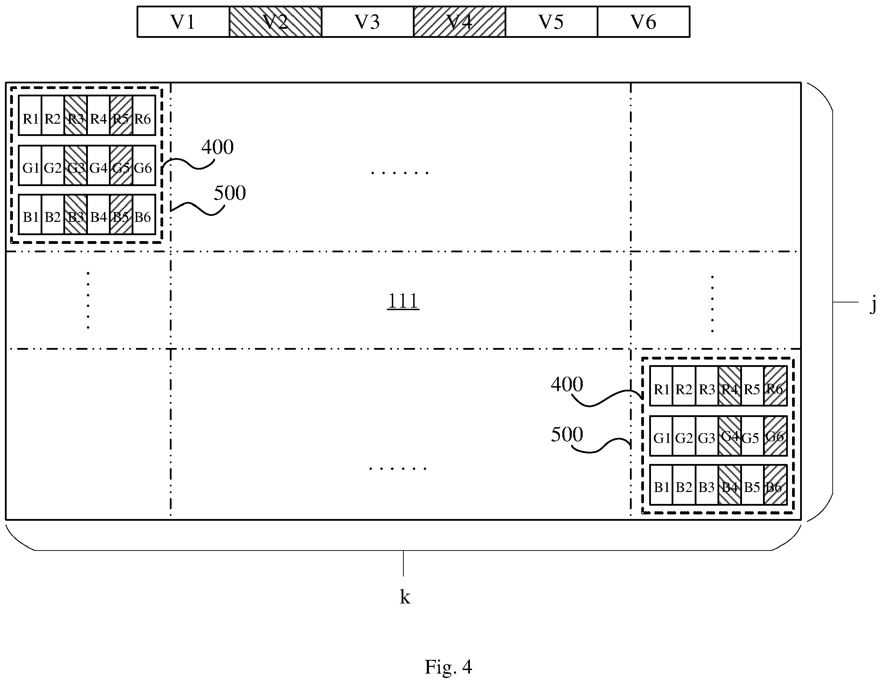

Fig. 4 shows an embodiment in which the display panel is divided into a plurality of correction areas. Referring to Fig. 4, the display panel 111 defines a plurality of correction areas 500, and a combined area range of all correction areas 500 is 90% to 100% of an area of the display panel 111. In some embodiments, a combined area range of all correction areas 500 is 90% to 100% of the area of the multi-viewpoint 3D display screen. In the embodiment shown in Fig. 4, the plurality of correction areas 500 of the display panel 111 are arranged in a form of array, comprising k columns and j rows (k×j) correction areas 500. Each correction area 500 may be defined by a composite pixel 400 containing three composite subpixels. In other embodiments, each correction area may be defined by two or more than two composite pixels, or defined by two or more than two composite subpixels, or defined by two or more than two composite subpixels that do not belong to the same composite pixel.

In some embodiments, the plurality of correction areas 500 of the multi-viewpoint 3D display screen 110 are arranged in a form of irregular array, for example, the size of each correction area 500 is different, and the plurality of correction areas are not arranged in rows or in columns.

In some embodiments, a length range of each correction area 500 is 1% to 30%, such as 10%, 15%, 20% or 25%, of a display panel 111 length. In some embodiments, the length range of each correction area 500 is 1% to 30%, such as 10%, 15%, 20% or 25%, of the length of a multi-viewpoint 3D display screen.

In some embodiments, a width range of each correction area 500 is 1% to 30%, such as 10%, 15%, 20% or 25%, of a display panel 111 width. In some embodiments, the width range of each correction area 500 is 1% to 30%, such as 10%, 15%, 20% or 25%, of the width of a multi-viewpoint 3D display screen.

In some embodiments, the length range of each correction area 500 is 2 cm-20 cm.

In some embodiments, the width range of each correction area 500 is 2 cm-20 cm.

The deviation of the correction correlation between the subpixels in one correction area and the viewpoints to the theoretical correlation and the deviation of the correction correlation between the subpixels in another correction area and viewpoints to the theoretical correlation may be consistent or basically consistent, and may also be inconsistent.

Further referring to Fig. 4, an embodiment of inconsistence of the deviation of the correction correlation between the subpixels in different correction areas 500 and the viewpoints to the theoretical correlation is shown. In the embodiment shown in Fig. 4, in the correction area 500 located at a left upper corner of the multi-viewpoint 3D display screen 110, the correction viewpoints corresponding to the subpixels of each composite subpixel are shifted to left by one viewpoint compared to the theoretical viewpoint, the correction subpixels corresponding to the viewpoint V2 are the third subpixels R3, G3, B3 of each composite subpixel, and the correction subpixels corresponding to the viewpoint V4 are the fifth subpixels R5, G5, B5 of each composite subpixel. In the correction area 500 located at a right lower corner of the multi-viewpoint 3D display screen 110, the correction viewpoints corresponding to the subpixels of each composite subpixel are shifted to left by two viewpoints compared to the theoretical viewpoint, the correction subpixels corresponding to the viewpoint V2 are the fourth subpixels R4, G4, B4 of each composite subpixel, and the correction subpixels corresponding to the viewpoint V4 are the sixth subpixels R6, G6, B6 of each composite subpixel.

In the embodiment shown in Fig. 4, the deviation of the correction viewpoints, corresponding to all subpixels, in the same correction area 500 relative to the theoretical viewpoints is consistent. In some embodiments, the deviation of the correction viewpoints, corresponding to all subpixels, in the same correction area relative to the theoretical viewpoints may be inconsistent. In some other embodiments, the deviation of the correction viewpoints corresponding to all homochromatic subpixels in the same correction area relative to the theoretical viewpoints is consistent, while the deviation of the correction viewpoints corresponding to the heterochromatic subpixels to the theoretical viewpoints is inconsistent.

In some embodiments, as shown in Fig. 1A, the multi-viewpoint 3D display apparatus 100 may be provided with a 3D processing apparatus 130. The 3D processing apparatus 130 simultaneously processes the rendering on the subpixels in each composite subpixel of the 3D display screen 110. There may be a single 3D processing apparatus, or at least two 3D processing apparatuses. The at least two 3D processing apparatuses may process the rendering on the subpixels in each composite subpixel of the 3D display screen in parallel, in serial or in combination of serial and parallel. Those skilled in the field shall understand that the above-mentioned at least two 3D processing apparatuses may distribute and process the multiple rows and columns of composite pixels or composite subpixels of the 3D display screen in parallel in other ways, which falls within the scope of the embodiments of the present disclosure.

The 3D processing apparatus may be integrated with a memory for storing the correction correlation between the subpixels and the viewpoints of each correction area 500. The memory may also be in communication connection to the 3D processing apparatus and transmits the correction correlation between all subpixels and viewpoints of each correction area 500 to the 3D processing apparatus. The memory may also store the theoretical correlation between all subpixels and viewpoints in each correction area 500.

In some embodiments, the 3D processing apparatus 130 may optionally comprise a cache 131 to cache received video frames.

In some embodiments, the 3D processing apparatus is a FPGA or ASIC chip or a FPGA or ASIC chipset.

Referring to Fig. 1A, the multi-viewpoint 3D display apparatus 100 may further comprise a processor 120 that is in communication connection to the 3D processing apparatus 130 through a 3D signal interface 140. In some embodiments, the processor 120 is comprised by a computer or a smart terminal such as a mobile terminal, or used as a processor apparatus. However, it may be conceivable that in some embodiments, the processor 120 may be arranged outside the multi-viewpoint 3D display apparatus 100, for example, the multi-viewpoint 3D display apparatus 100 may be a multi-viewpoint 3D monitor with a 3D processing apparatus, such as a non-intelligent 3D television.

For simplicity, in the following description, an exemplary embodiment of the multi-viewpoint 3D display apparatus 100 internally comprises the processor 120. Further, the 3D signal interface 140 is configured as an internal interface connecting the processor 120 and the 3D processing apparatus 130. The multi-viewpoint 3D display apparatus 100, for example, may be the mobile terminal, and the 3D signal interface 140 as the internal interface of the multi-viewpoint 3D display apparatus 100 may be a mobile industry processor interface (MIPI), a mini-MIPI, a low voltage differential signaling (LVDS) interface, a min-LVDS interface or a Display Port interface.

In some embodiments, as shown in Fig. 1A, the processor 120 of the multi-viewpoint 3D display apparatus 100 may further comprise a register 121. The register 121 may be configured to temporarily store instructions, data and addresses.

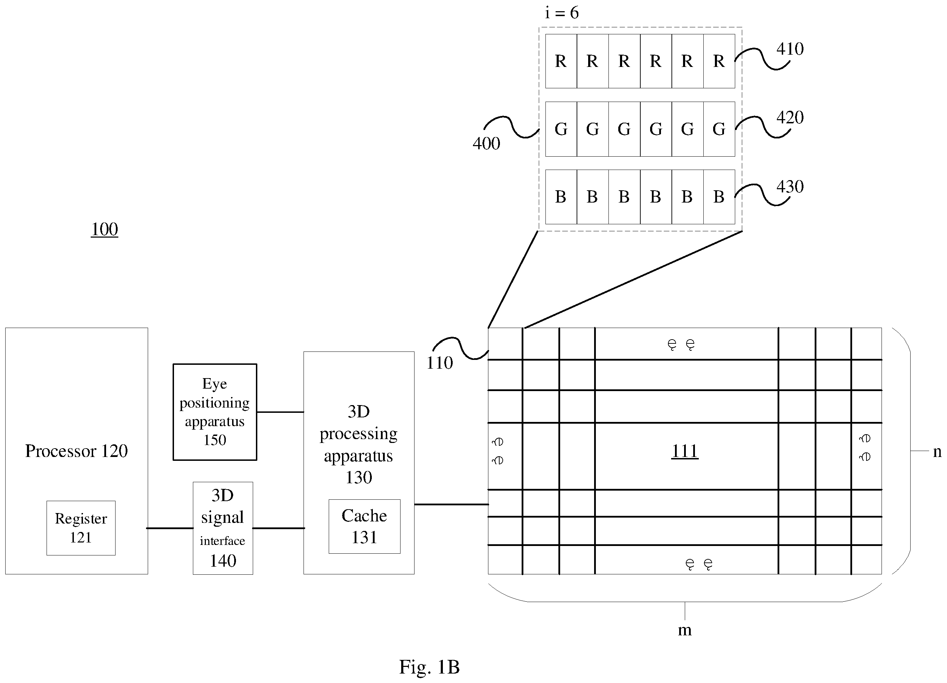

In some embodiments, the multi-viewpoint 3D display apparatus may further comprise an eye positioning data acquiring apparatus for acquiring eye positioning data, for example, an eye positioning apparatus or an eye positioning data interface, and the 3D processing apparatus is configured to render the corresponding subpixels in the composite subpixels in association with the correction correlation between the subpixels and the viewpoints based on the eye positioning data. For example, in the embodiment shown in Fig. 1B, the multi-viewpoint 3D display apparatus 100 comprises an eye positioning apparatus 150 in communication connection to the 3D processing apparatus 130, and the 3D processing apparatus 130 may receive the eye positioning data directly.

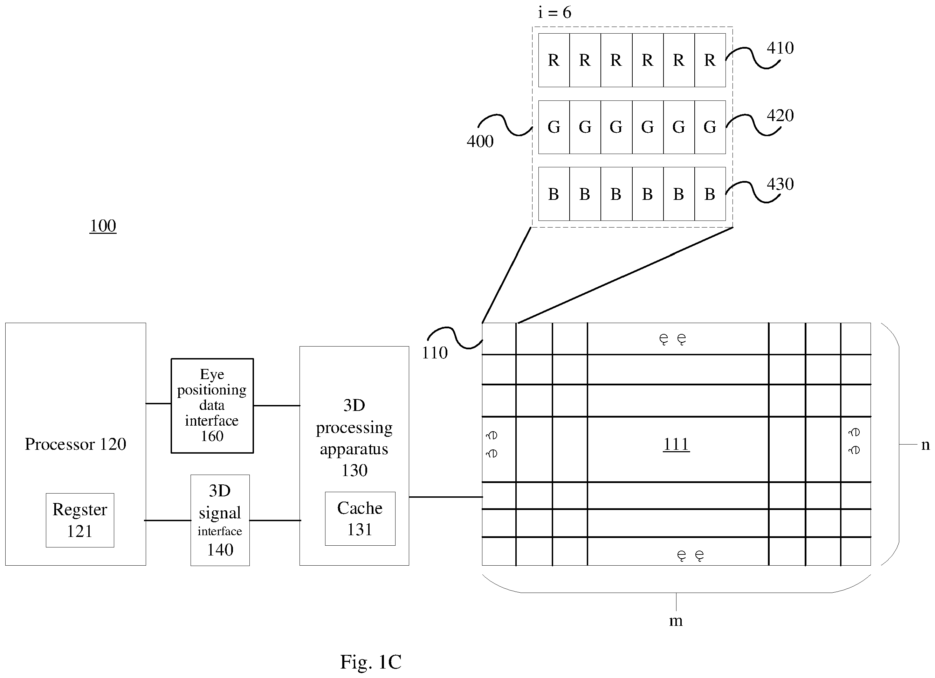

In the embodiment shown in Fig. 1C, the eye positioning apparatus (not shown), for example, may be connected to the processor 120 directly, and the 3D processing apparatus 130 acquires the eye positioning data from the processor 120 through the eye positioning data interface 160. In some other embodiments, the eye positioning apparatus may be connected with the processor and the 3D processing apparatus simultaneously, so that on the one hand, the 3D processing apparatus 130 may acquire the eye positioning data directly from the eye positioning apparatus, and on the other hand, other information acquired by the eye positioning apparatus may be processed by the processor.

In some embodiments, the eye positioning data comprises eye spatial position information showing an eye spatial position of the user, the eye spatial position information may be shown in a three-dimensional coordinate form, for example, may comprise spacing information (i.e. depth information of an eye/face of the user) between the eye/face of the user and the multi-viewpoint 3D display screen or the eye positioning apparatus, viewed position information of the eye/face in the transverse direction of the multi-viewpoint 3D display screen or the eye positioning apparatus, and position information of the eye/face of the user in a vertical direction of the multi-viewpoint 3D display screen or the eye positioning apparatus. The eye spatial position may also be shown in a form of two-dimensional coordinates containing any two of the spacing information, the transverse position information and the vertical position information. The eye positioning data may also comprise the viewpoint (viewpoint position) where the eyes (for example, two eyes) of the user are located, a viewing angle of the user, etc.

In some embodiments, the eye positioning apparatus comprises an eye locator configured to shoot a user image (such as a user face image), an eye location image processor configured to determine the eye spatial position based on the shot user image, , and an eye positioning data interface configured to transmit the eye spatial position information. The eye spatial position information shows an eye spatial position.

In some embodiments, the eye locator comprises a first camera configured to shoot a first image and a second camera configured to shoot a second image, and the eye location image processor is configured to identify, based on at least one image of the first image and the second image, the existence of the eyes and determine, based on the identified eyes, the eye spatial position.

In some embodiments, the eye location image processor may determine the viewpoints where the user eyes are located based on the eye spatial position. In some other embodiments, the 3D processing apparatus determines the viewpoints where the user eyes are located based on the acquired eye spatial position.

In some embodiments, the eye locator comprises at least one camera configured to shoot at least one image and a depth detector configured to acquire eye depth information of the user, the eye location image processor is configured to identify the existence of the eyes based on the shot at least one image, and determine the eye spatial position based on the identified eyes and eye depth information. The 3D processing apparatus may determine the viewpoints where the user eyes are located based on the acquired eye spatial position.

Referring to the embodiment shown in Fig. 4, in a case where the correction correlation data between the subpixels in each correction area 500 and the viewpoints is already stored, when the eye positioning data shows that the user is at the viewpoints V2 and V4, the 3D processing apparatus correspondingly renders the corresponding subpixels in each correction area 500 of the display panel 111 based on the correction correlation data. For example, for the correction area 500 at the left upper corner of the display panel 111, the 3D processing apparatus renders the correction subpixels R3, G3, B3 corresponding to the viewpoint V2 and the correction subpixels R5, G5, B5 corresponding to the viewpoint V4. For example, for the correction area 500 at the right lower corner of the display panel 111, the 3D processing apparatus renders the correction subpixels R4, G4, B4 corresponding to the viewpoint V2 and the correction subpixels R6, G6, B6 corresponding to the viewpoint V4.

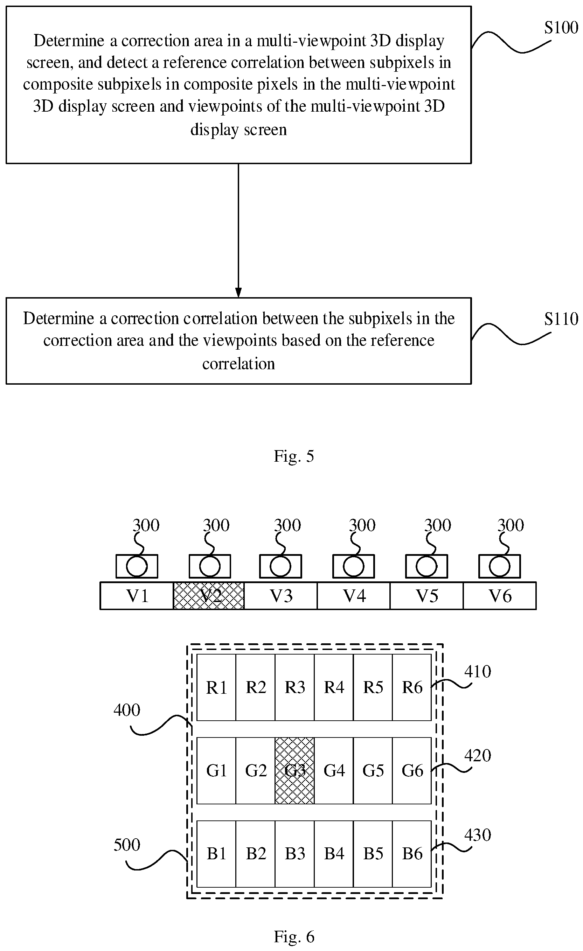

According to the embodiments of the present disclosure, a method for determining the above-mentioned correction correlation between the subpixels and the viewpoints of the multi-viewpoint 3D display apparatus 100 is provided. As shown in Fig. 5, the method for determining the correction correlation between the subpixels and the viewpoints comprises:
S100, determining a correction area in a multi-viewpoint 3D display screen, and detecting a reference correlation between subpixels in composite subpixels in composite pixels in the multi-viewpoint 3D display screen and viewpoints of the multi-viewpoint 3D display screen;
S110, determining a correction correlation between the subpixels in the correction area and the viewpoints based on the reference correlation.

In some embodiments, a plurality of correction areas may be provided.

In some embodiments, the correction areas may be defined in a display panel of the multi-viewpoint 3D display screen.

In some embodiments, the determination method further comprises: storing the correction correlation. The correction correlation may be stored by a memory integrated in the 3D processing apparatus 130, and may also be stored by the memory connected to the 3D processing apparatus 130. In some embodiments, storing the correction correlation is to store the correction correlation between the subpixels and the viewpoints according to the determined correction area.

The above-mentioned sequence numbers of steps S100 to S300 are intended to clarify the division of each step, and do not mean to limit a logical order of these steps. The step S100 may be implemented before the step S200, and may also be implemented after the step S200.

In some embodiments, before the reference correlation is detected, a plurality of correction areas are determined in the multi-viewpoint 3D display screen. In this case, the method for determining the correction correlation between the subpixels and the viewpoints in the multi-viewpoint 3D display screen comprises:
determining a plurality of correction areas in the multi-viewpoint 3D display screen;
detecting the reference correlation between at least one subpixel in each correction area and at least one viewpoint; and
determining the correction correlation between the subpixels in each correction area and the viewpoints based on the reference correlation.

In some embodiments, the plurality of correction areas may be determined in the multi-viewpoint 3D display screen without any experience or detection data. For example, as shown in Fig. 4, the correction area 500 is determined by one composite pixel 400, containing three composite subpixels, of the display panel 111 of the multi-viewpoint 3D display screen. In some other embodiments, the correction area is determined by two or more than two composite pixels of the display panel. In some other embodiments, the correction area is determined by a plurality of composite subpixels, which do not belong to the same composite pixel, of the display panel. In some other embodiments, the correction area is determined in a form of array in the display panel. In further another embodiment, the correction area is determined according to a proportion of the correction area in the display panel, for example, a length range of each correction area is 1% to 30% of the display panel length, a width range of each correction area is 1% to 30% of the display panel width, or, for example, the length range of each correction area is 2 cm to 20 cm, and the width range of each correction area is 2 cm to 20 cm.

In some embodiments, the plurality of correction areas may be determined in the multi-viewpoint 3D display screen based on pre-established correlation data between a plurality of subpixels and at least one viewpoint in the multi-viewpoint 3D display screen or optical correlation data between a plurality of subpixels and gratings.

In some embodiments, the pre-establishing method may be implemented based on experience or empirical values. The empirical values, for example, may be empirical values, accumulated during the assembling of the multi-viewpoint 3D display apparatus 100, about an aligning deviation of the gratings or the deviation of the gratings to the pixel refraction.

In some embodiments, determining the plurality of correction areas 500 of the display panel 111 based on experience or empirical values comprises: estimating or calculating a range that can be characterized by the deviation of the correction viewpoint corresponding to one subpixel in the display panel 111 relative to the theoretical viewpoint based on the experience or empirical value, for example, the range with a peripheral length of 5 cm and a width of 5 cm can be characterized, the deviation between the correction viewpoints, corresponding to all subpixels in the characterized range, and the theoretical viewpoints is consistent or basically consistent, and each correction area 500 is defined by the characterized range.

In some embodiments, the pre-establishing method may be implemented by pre-detection. For example, the correlation data between a plurality of subpixels and at least one viewpoint in the display panel 111 is pre-detected, and each correction area 500 is defined based on the correlation data.

In some embodiments, pre-detecting the correlation data between the plurality of subpixels and at least one viewpoint in the display panel 111 may comprise pre-detecting the correlation between a plurality of subpixels located at the left side, middle and right side of the display panel 111 and at least one viewpoint.

In some embodiments, defining each correction area based on the correlation data comprises estimating or calculating a general deviation trend or amplitude of the correction viewpoint corresponding to the subpixel of each position of the display panel 111 relative to the theoretical viewpoint, and determining each correction area 500 of the display panel 111 based on the general deviation trend or amplitude. For example, the areas with consistent or approximate deviation amplitude are defined as one correction area 500.

In some embodiments, the optical relationship data between a plurality of subpixels and the gratings in the display panel 111 may be pre-detected, and each correction area 500 is defined based on the optical relationship data.

In some embodiments, pre-detecting the optical relationship data between the plurality of subpixels and the gratings in the display panel 111 may comprise pre-detecting the optical relationship data between a plurality of subpixels located at the left side, middle and right side of the display panel and the gratings.

In some embodiments, defining a plurality of correction areas based on the optical relationship data comprises estimating or calculating a general deviation trend or amplitude of the correction viewpoint corresponding to the subpixel of each position of the display panel 111 relative to the theoretical viewpoint based on the detected optical relationship data, and determining each correction area 500 of the display panel 111 based on the general deviation trend or amplitude. For example, the areas with consistent or approximate deviation amplitude are defined as one correction area 500.

In some embodiments, the optical relationship data, for example, may be aligning relationship data of the gratings relative to the subpixels or refraction data of the gratings for the subpixels.

In some embodiments, after reference correlation is detected, a plurality of correction areas are determined in the multi-viewpoint 3D display screen. In this case, the method for determining the correction correlation between the subpixels and the viewpoints in the multi-viewpoint 3D display screen comprises:
detecting a reference correlation between a plurality of subpixels and at least one viewpoint in a multi-viewpoint 3D display screen, wherein the detected each subpixel may be regarded as a reference subpixel;
determining a plurality of correction areas based on the reference correlation, wherein each correction area is determined by at least one reference subpixel; and
determining the correction correlation between the subpixels in each correction area and each viewpoint based on the reference correlation.

In some embodiments, determining the plurality of correction areas based on the reference correlation comprises: determining a distance between two detected subpixels adjacent to each other; and defining a border of the two correction areas adjacent to each other with a center line of the distance.

In some embodiments, detecting the reference correlation between at least one subpixel and at least one viewpoint comprises:
arranging optical detection apparatuses at a plurality of spatial positions corresponding to all viewpoints of the multi-viewpoint 3D display screen;
lighting at least one subpixel;
recording the correlation between the lit subpixel and the viewpoint where the optical detection apparatus, detecting the lit subpixel, is located as the reference correlation.

Fig. 6 shows an embodiment of executing the above steps. As shown in Fig. 6, the multi-viewpoint 3D display apparatus has 6 viewpoints V1-V6, and the optical detection apparatus 300 is arranged at the spatial position of each viewpoint. The display panel 111 determines the correction area 500 with three subpixels 410, 420 and 430 of one composite pixel 400. The subpixel G3 in the correction area 500 is selected as the reference subpixel. The selected reference subpixel G3 is lit, and the lighting way, for example, may be flash or always on. The optical detection apparatuses 300 at the viewpoints V1-V6 detect whether the lit reference subpixel G3 can be identified on the position. In some embodiments, the optical detection apparatus 300 is configured as a camera or a pick-up lens, and the camera or the pick-up lens shoots a series of photos, and identifies whether there is a bright spot, corresponding to the lit reference subpixel G3, in the photo. A result shows that the optical detection apparatus 300 at the viewpoint V2 detects the bright spot corresponding to the lit reference subpixel G3, and records the correlation between the viewpoint V2 and the lit reference subpixel G3 as the reference correlation. The reference correlation is also the correction correlation between the viewpoint V2 and the subpixel G3.

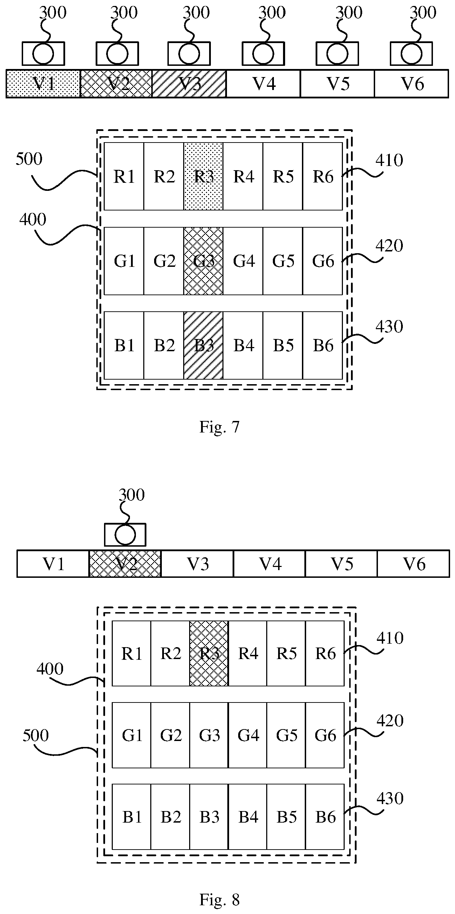

Fig. 7 shows another embodiment of executing the above steps. As shown in Fig. 7, the multi-viewpoint 3D display apparatus has 6 viewpoints V1-V6, and the optical detection apparatus 300 is arranged at the spatial position of each viewpoint. The display panel 111 defines the correction area 500 with three subpixels 410, 420 and 430 of one composite pixel 400. Subpixels R3, G3, B3 of each of the composite subpixels 410, 420, 430 in the correction area 500 are selected as reference subpixels. The selected subpixels R3, G3 and B3 are lit, and the lighting way, for example, may be flash or always on. The optical detection apparatuses 300 at the viewpoints V1-V6 detect whether the lit subpixels R3, G3 and B3 in the correction area 500 can be identified on the position. In some embodiments, the optical detection apparatus 300 is configured as a camera or a pick-up lens, and the camera or the pick-up lens shoots a series of photos, and identifies whether there is a bright spot, corresponding to the lit reference subpixels R3, G3 and B3, in the photo. The result shows that the optical detection apparatus 300 at the viewpoint V1 detects the bright spot of the subpixel R3, the optical detection apparatus 300 at the viewpoint V2 detects the bright spot of the subpixel G3, and the optical detection apparatus 300 at the viewpoint V3 detects the bright spot of the subpixel B3. The correlation between the viewpoints VI, V2 and V3 and the lit subpixels R3, G3 and B3 is recorded as the reference correlation. The reference correlation is also the correction correlation between the viewpoints VI, V2 and V3 and the subpixels R3, G3 and B3.

In some embodiments, detecting the reference correlation between at least one subpixel and at least one viewpoint comprises:
arranging an optical detection apparatus on at least one spatial position corresponding to at least one viewpoint;
lighting each subpixel in at least one composite subpixel in each correction area in sequence;
acquiring a coordinate of the lit subpixel in the display panel when the optical detection apparatus detects the lit subpixel; and
recording the correlation between the lit subpixel and the viewpoint where the optical detection apparatus, detecting the lit subpixel, is located as the reference correlation.

Fig. 8 shows an embodiment of executing the above steps. As shown in Fig. 8, the multi-viewpoint 3D display apparatus has 6 viewpoints V1-V6, and the optical detection apparatus 300, such as a camera, is arranged at the spatial position of the viewpoint V2. The display panel 111 determines the correction area 500 with three subpixels 410, 420 and 430 of one composite pixel 400. Each red subpixel R1-R6 of the red composite subpixel 410 in the correction area 500 is lit in sequence, and the lighting way may be flash or always on. The optical detection apparatus 300 at the viewpoint V2 detects the bright spot of which subpixel in the red composite subpixel 410 can be identified on the position. In some embodiments, the optical detection apparatus 300 is configured as a camera or a pick-up lens, and the camera or the pick-up lens shoots a series of photos, and identifies whether the bright spot of the subpixel that can be shot in the photo. When a bright spot is detected, the coordinates of the subpixels, corresponding to the detected bright spot, in the display panel are acquired. The coordinates of the subpixels in the display panel comprise: place (such as the n^{th}) of the subpixel in the corresponding composite subpixel, place (such as the n^{th} row and the m^{th} column) of the subpixel in the corresponding composite pixel, place (such as the n^{th} row and the m^{th} column) of the subpixel in the corresponding correction area 500, and pace (such as the n^{th} row and the m^{th} column) of the subpixel in all subpixels of the display panel. In the shown embodiment, the bright spot detected by the optical detection apparatus 300 located at the viewpoint V2 corresponds to the third subpixel R3 of the red composite subpixel 410. The correlation between the viewpoint V2 and the third subpixels R3 of the composite subpixel 410 is recorded as the reference correlation. The reference correlation between the viewpoint V2 and the subpixel R3 is also the correction correlation between the viewpoint V2 and the subpixel R3.

In some embodiments, determining the correction correlation between the subpixels and each viewpoint in each correction area based on the reference correlation comprises:
acquiring a theoretical correlation between at least one detected subpixel in each correction area and at least one viewpoint;
determining a deviation between the theoretical correlation and the reference correlation; and
determining the correction correlation between the subpixels in each correction area and each viewpoint based on the deviation.

In some embodiments, the theoretical correlation may be the theoretical correlation between the subpixels and the viewpoints in each composite subpixel in a case of ideal alignment of the gratings. As shown in Fig. 2, the 6 subpixels of the composite subpixels 410, 420, 430 correspond to the 6 viewpoints V1-V6 in sequence theoretically. The users at the viewpoints V2 and V4 theoretically see the second subpixels R2, G2, B2 and the fourth subpixels R4, G4, B4 of each of the composite subpixels 410, 420, 430. In some embodiments, the theoretical correlation may be stored in the memory, so as to be read by the 3D processing apparatus 130.

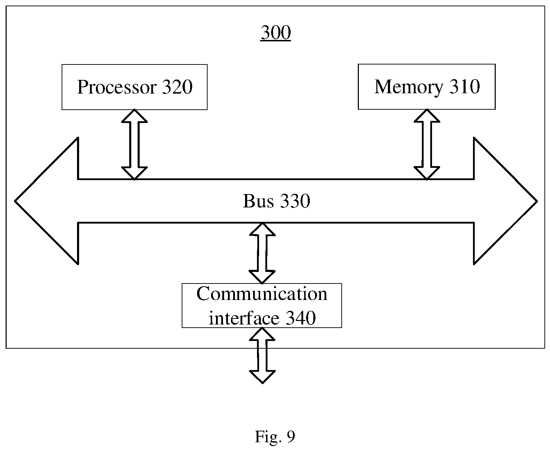

In some embodiments, determining the deviation between the theoretical correlation and the reference correlation comprises judging a shifting amplitude of the correction viewpoint, corresponding to the reference subpixel, relative to the theoretical viewpoint. For example, as shown in Fig. 9, the correction viewpoint V2 corresponding to the reference subpixel G3 is shifted to left by one viewpoint compared to the theoretical viewpoint V3.

In some embodiments, determining the correction correlation between all subpixels in each correction area and each viewpoint based on the deviation may comprise: determining the correction viewpoint corresponding to all subpixels in each correction area based on the deviation of the correction viewpoint, corresponding to the reference subpixel in each correction area, relative to the theoretical viewpoint, when the deviations of the correction viewpoints, corresponding to all subpixels in each correction area, relative to the theoretical viewpoints are consistent or generally consistent.

In some embodiments, determining the correction correlation between all subpixels in each correction area and each viewpoint based on the deviation may comprise: determining the correction viewpoint corresponding to all homochromatic subpixels in each correction area based on the deviation of the correction viewpoint, corresponding to the reference subpixel of each color in each correction area, compared to the theoretical viewpoint, when the deviations of the correction viewpoints, corresponding to all homochromatic subpixels in each correction area, compared to the theoretical viewpoints are consistent or generally consistent.

In some embodiments, determining the correction correlation between all subpixels in each correction area and each viewpoint based on the deviation may comprise: calculating the correction viewpoints corresponding to all subpixels in each correction area through a mathematical method, based on the deviation between the correction viewpoint corresponding to the reference subpixel in each correction area and the theoretical viewpoint. The mathematical method comprises linear difference, linear extrapolation, nonlinear difference, nonlinear extrapolation, Taylor series approximation, reference coordinate system linear change, reference coordinate system nonlinear change, exponential models and trigonometric transformation.

According to the embodiments of the present disclosure, a display method of the above-mentioned multi-viewpoint 3D display apparatus 100 is further provided, comprising:
receiving video frames of 3D video signals;
acquiring correction correlation data between subpixels in each correction area and viewpoints of a multi-viewpoint 3D display screen;
rendering, based on the received video frames of the 3D video signals, the subpixels, corresponding to all viewpoints or predetermined viewpoints, in each composite subpixel, wherein the correspondence between the subpixels and all viewpoints or predetermined viewpoints is determined by the correction correlation data.

In some embodiments, the 3D processing apparatus 130 receives the video frames of, for example, the unzipped 3D video signal from the processor 120 through, for example, the 3D signal interface 140 as the internal interface. Each video frame may contain two images or a composite image. The two images or the composite image may comprise images of different types and may be distributed in various forms. In some embodiments, the two images may be a left-eye parallax image and a right-eye parallax image respectively. In some embodiments, the two images may be a rendered color image and a depth image respectively. In some embodiments, the composite image may contain left-eye and right-eye parallax composite images interlaced left and right, rendered color and depth composite images interlaced left and right, left-eye and right-eye parallax composite images interlaced up and down, rendered color and depth composite images interlaced up and down, left-eye and right-eye parallax composite images of a chessboard format, and a rendered color image and depth image of the chessboard format.

In some embodiments, after receiving the video frames comprising the two images, at least one 3D processing apparatus 130 renders at least one subpixel, corresponding to all viewpoints, in each composite subpixel based on one of the two images and renders at least another subpixel, corresponding to all viewpoints, in each composite subpixel based on the other one of the two images. The correspondence between the subpixels and all viewpoints is determined by the correction correlation, between the subpixels and the viewpoints in each correction area, obtained by executing the above-mentioned method for determining the correction correlation between the subpixels and the viewpoints of the multi-viewpoint 3D display apparatus 100.

Similarly, in some embodiments, after receiving the video frames comprising the composite image, at least one 3D processing apparatus renders at least two subpixels, corresponding to all viewpoints, in each composite subpixel based on the composite image. For example, at least one subpixel corresponding to the viewpoint is rendered according to a first image (portion) in the composite image, and at least another subpixel corresponding to the viewpoint is rendered according to a second image (portion).

In some embodiments, this is, for example, dynamic rendering based on eye positioning data. In this case, after receiving the video frames comprising the two images, at least one 3D processing apparatus 130 renders at least one subpixel, corresponding to the predetermined viewpoint where the user is, in each composite subpixel based on one of the two images, and renders at least another subpixel, corresponding to another predetermined viewpoint where the user is, in each composite subpixel based on the other one of the two images. Similarly, in some embodiments, after receiving the video frames comprising the composite image, at least one 3D processing apparatus renders at least two subpixels, corresponding to two predetermined viewpoints where the user is located, in each composite subpixel based on the composite image. For example, at least one subpixel corresponding to the predetermined viewpoint is rendered according to a first image (portion) in the composite image, and at least another subpixel corresponding to the other predetermined viewpoint is rendered according to a second image (portion).

The embodiments of the present disclosure provide an electronic device 300, and referring to Fig. 9, the electronic device 300 comprises a processor 320 and a memory 310. In some embodiments, the electronic device 300 may further comprise a communication interface 340 and a bus 330. The processor 320, the communication interface 340 and the memory 310 are in communication connection with one another through the bus 330. The communication interface 340 may be configured to transmit information. The processor 320 may invoke logic instructions in the memory 310 to execute the above-mentioned display method of the multi-viewpoint 3D display apparatus.

In addition, the logic instructions in the memory 310 may be implemented in a form of software functional units, and may be stored in a computer-readable storage medium when the logic instructions are sold or used as an independent product.

The memory 310, as a computer-readable storage medium, may be used for storing software programs and computer-executable programs, such as program instructions/modules corresponding to the methods in the embodiments of the present disclosure. The processor 320 performs the functional application and data processing by running the program instructions/modules stored in the memory 310, i.e., implements the display method for the multi-viewpoint 3D display apparatus.

The memory 310 may comprise a storage program region and a storage data region, wherein the storage program region may store an operating system and at least one application program required by the functions; and the storage data region may store data and the like created according to the use of terminal equipment. In addition, the memory 310 may comprise a high-speed random access memory (RAM) and a nonvolatile memory (NVM).

The "method for determining the correlation between the subpixels and the viewpoints" and the "method for correcting the correlation between the subpixels and the viewpoints" involved in the present disclosure are intended to express the same meaning, and cover the identification, acquisition and storage of the correlation between the subpixels and the viewpoints in the practical use of the multi-viewpoint 3D display apparatus, but are not intended to cover the adjustment of hardware positional relationships such as the alignment of the gratings.

A computer-readable storage medium provided by the embodiments of the present disclosure stores computer-executable instructions, and the computer-executable instructions are configured to execute the above method for realizing multi-viewpoint 3D display screen correction.

A computer program product provided by the embodiments of the present disclosure comprises computer programs stored on the computer-readable storage medium, the computer programs comprise program instructions, and when the program instructions are executed by a computer, the computer executes the above method for realizing multi-viewpoint 3D display screen correction.

Technical solutions of embodiments of the present disclosure may be reflected in a form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a read-only memory (ROM), a random access memory (RAM), a diskette or an optical disk, and may also be a transient storage medium.

The above description and drawings sufficiently illustrate the embodiments of the present disclosure to enable those skilled in the art to practice them. Other embodiments may comprise structural, logical, electrical, process, and other changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. The terms used in the present application are used to describe the embodiments only and not to limit the claims. When used in the present application, the terms "comprise", etc. refer to the presence of at least one of stated features, but does not preclude the presence of other features.

Those skilled in the art may recognize that the units and algorithm steps of each example described in conjunction with the embodiments disclosed herein can be implemented in electronic hardware, or a combination of computer software and electronic hardware. Those skilled in the art may use different methods for implementing the described functions for each particular application, but such implementations should not be considered beyond the scope of the embodiments of the present disclosure.

In the embodiments disclosed herein, the disclosed method and product (including, but not limited to the apparatus and the device) may be realized in other ways. For example, the device embodiments described above are merely schematic. For example, the division of the devices may be only a logical functional division, and may be an additional division manner in actual realization. For example, multiple devices or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The devices described as separate components may or may not be physically separated, and the components shown as the devices may or may not be physical devices. The present embodiments may be implemented by selecting some or all of the devices according to actual needs. In addition, each functional device in the embodiments of the present disclosure may be integrated into one processing device, or each device may exist physically alone, or two or more devices may be integrated into one device.

The flowcharts and block diagrams in the drawings show architectures, functions and operations possibly implemented by systems, methods and computer program products according to the embodiments of the present disclosure. In this regard, each block in the flowcharts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flowcharts and the block diagrams in the drawings, operations or steps corresponding to different blocks may also occur in different orders than those disclosed, and sometimes there is no specific order between different operations or steps. For example, two continuous operations or steps maybe actually performed substantially concurrently, or sometimes may be performed in the reverse order, depending on the functions involved. Each block in the block diagrams and/or flowcharts, and combinations of the blocks in the block diagrams and/or flowcharts, can be implemented by special hardware-based systems that perform specified functions or actions, or implemented by combinations of special hardware and computer instructions.

## Claims

1. A method for realizing multi-viewpoint 3D display screen correction, comprising:
determining a correction area in a multi-viewpoint 3D display screen, and detecting a reference correlation between subpixels in composite subpixels of composite pixels in the multi-viewpoint 3D display screen and viewpoints of the multi-viewpoint 3D display screen;
determining a correction correlation between subpixels in the correction area and the viewpoints based on the reference correlation.

2. The method according to claim 1, further comprising: storing the correction correlation.

3. The method according to claim 1, wherein determining a correction area in the multi-viewpoint 3D display screen comprises:
determining a plurality of correction areas in the multi-viewpoint 3D display screen in a form of array; or
determining a length or a width of the correction areas by a percentage of a length or a width of the multi-viewpoint 3D display screen; or
determining the correction areas by a plurality of composite pixels or a plurality of composite subpixels in the multi-viewpoint 3D display screen; or
determining the correction areas by a viewpoint correlation or an optical correlation of the multi-viewpoint 3D display screen.

4. The method according to claim 3, wherein determining a plurality of correction areas in the multi-viewpoint 3D display screen in a form of array comprises:
determining a length of each correction area of the plurality of correction areas by 2 cm to 20 cm; or
determining a width of each correction area of the plurality of correction areas by 2 cm to 20 cm.

5. The method according to claim 3, wherein determining a length or a width of the correction areas by a percentage of a length or a width of the multi-viewpoint 3D display screen comprises:
determining a length of the correction areas by 1% to 30% of a length of the multi-viewpoint 3D display screen; or
determining a width of the correction areas by 1% to 30% of a width of the multi-viewpoint 3D display screen.

6. The method according to claim 3, wherein determining the correction areas by a plurality of composite pixels or a plurality of composite subpixels in the multi-viewpoint 3D display screen comprises:
determining the correction areas by a plurality of composite pixels in a form of array in the multi-viewpoint 3D display screen; or
determining the correction areas by a plurality of composite subpixels in a form of array in the multi-viewpoint 3D display screen.

7. The method according to claim 3, wherein determining the correction areas by a viewpoint correlation or an optical correlation of the multi-viewpoint 3D display screen comprises:
establishing a viewpoint correlation between a plurality of subpixels in the multi-viewpoint 3D display screen and at least one viewpoint, and determining the correction areas based on the viewpoint correlation; or
establishing an optical correlation between a plurality of subpixels in the multi-viewpoint 3D display screen and gratings of the multi-viewpoint 3D display screen, and determining the correction areas based on the optical correlation.

8. The method according to any one of claims 1-7, wherein detecting a reference correlation between subpixels in composite subpixels in composite pixels in the multi-viewpoint 3D display screen and viewpoints of the multi-viewpoint 3D display screen comprises:
detecting a reference correlation between at least one subpixel in the correction areas and at least one viewpoint based on determined correction areas.

9. The method according to any one of claims 1-7, wherein detecting a reference correlation between subpixels in composite subpixels in composite pixels in the multi-viewpoint 3D display screen and viewpoints of the multi-viewpoint 3D display screen comprises:
detecting a reference correlation between a plurality of subpixels in the multi-viewpoint 3D display screen and at least one viewpoint of the multi-viewpoint 3D display screen;
determining correction areas in the multi-viewpoint 3D display screen comprises:
determining the correction areas based on the detected reference correlation, wherein the correction areas contain at least one subpixel of the plurality of detected subpixels.

10. The method according to claim 9, wherein determining the correction areas based on the detected reference correlation comprises:
determining a distance between two subpixels adjacent to each other in the plurality of detected subpixels;
taking a center line of the distance as a boundary of two correction areas adjacent to each other, wherein the two subpixels are located in the two correction areas respectively.

11. The method according to any one of claims 1-7, wherein detecting a reference correlation between subpixels in composite subpixels in composite pixels in the multi-viewpoint 3D display screen and viewpoints of the multi-viewpoint 3D display screen comprises:
arranging optical detection apparatuses at a plurality of spatial positions corresponding to all viewpoints of the multi-viewpoint 3D display screen;
lighting at least one subpixel in the multi-viewpoint 3D display screen;
recording a correlation between a lit subpixel and a viewpoint where the optical detection apparatus, which detects the lit subpixel, is located as a reference correlation.

12. The method according to any one of claims 1-7, wherein detecting a reference correlation between subpixels in composite subpixels in composite pixels in the multi-viewpoint 3D display screen and viewpoints of the multi-viewpoint 3D display screen comprises:
arranging an optical detection apparatus on at least one spatial position corresponding to at least one viewpoint of the multi-viewpoint 3D display screen;
lighting each subpixel in at least one composite subpixel in sequence;
recording a correlation between a lit subpixel and a viewpoint where an optical detection apparatus, which detects the lit subpixel, is located as a reference correlation.

13. The method according to any one of claims 1-7, wherein determining a correction correlation between subpixels in the correction area and viewpoints based on the reference correlation comprises:
acquiring a theoretical correlation between a detected subpixel in the correction area and a viewpoint;
determining a deviation between the theoretical correlation and the reference correlation; and
determining, based on the deviation, a correction correlation between other subpixels in the correction area and viewpoints of the multi-viewpoint 3D display screen.

14. A multi-viewpoint 3D display method, comprising:
acquiring a correction correlation between subpixels in a correction area of a multi-viewpoint 3D display screen and viewpoints of the multi-viewpoint 3D display screen;
rendering subpixels in composite subpixels in composite pixels in the multi-viewpoint 3D display screen based on 3D signals according to the correction correlation.

15. The multi-viewpoint 3D display method according to claim 14, further comprising: acquiring eye positioning data;
rendering subpixels in composite subpixels in composite pixels in the multi-viewpoint 3D display screen comprises: rendering subpixels, corresponding to viewpoints corresponding to the eye positioning data, in the composite subpixels.

16. A multi-viewpoint 3D display apparatus, comprising:
a multi-viewpoint 3D display screen, comprising a plurality of composite pixels, wherein each composite pixel of the plurality of composite pixels comprises a plurality of composite subpixels, and each composite subpixel of the plurality of composite subpixels comprises a plurality of subpixels, wherein the multi-viewpoint 3D display screen defines a correction area;
a3D processing apparatus, configured to acquire a correction correlation between subpixels in a correction area of a multi-viewpoint 3D display screen and viewpoints of the multi-viewpoint 3D display screen, and trigger, based on 3D signals, the multi-viewpoint 3D display screen to render subpixels in the plurality of composite subpixels according to the correction correlation.

17. The multi-viewpoint 3D display apparatus according to claim 16, further comprising:
a memory, configured to store the correction correlation.

18. The multi-viewpoint 3D display apparatus according to claim 16, further comprising an eye positioning data acquiring apparatus, configured to acquire eye positioning data;
wherein the 3D processing apparatus is configured to trigger, based on 3D signals, the multi-viewpoint 3D display screen to render subpixels, corresponding to viewpoints corresponding to the eye positioning data, in the composite subpixels according to the correction correlation.

19. The multi-viewpoint 3D display apparatus according to any one of claims 16-18, wherein a plurality of correction areas are arranged in a form of array in the multi-viewpoint 3D display screen.

20. The multi-viewpoint 3D display apparatus according to claim 19, wherein a length of each correction area of the plurality of correction areas is 2 cm to 20 cm; or
a width of each correction area of the plurality of correction areas is 2 cm to 20 cm.

21. A computer-readable storage medium, storing computer-executable instructions, wherein the computer-executable instructions are configured to execute the method of any one of claims 1-15.

22. A computer program product, comprising computer programs stored on a computer-readable storage medium, wherein the computer programs comprise program instructions, and make a computer execute the method of any one of claims 1-15 when the program instructions are executed by the computer.
